# EUROPÄISCHE PATENTSCHRIFT

(11) **EP 2 490 834 B1**
(45) Veröffentlichungstag und Bekanntmachung des Hinweises auf die Patenterteilung: **07.01.2015**
(21) Anmeldenummer: 10752781.4
(22) Anmeldetag: 06.09.2010
(51) Int. Cl.: F16H 25/22, B21D 15/10, B21D 39/00, B29D 23/18, B29C 53/30

(54) **WÄLZGEWINDETRIEB MIT EINER SPINDEL UND VERWENDUNG DES WÄLZGEWINDETRIEBS**
ROLLER SCREW DRIVE COMPRISING A THREADED SHAFT, AND USE OF SAID ROLLER SCREW DRIVE
VIS D'ENTRAÎNEMENT À ROULEMENT MUNIE D'UNE BROCHE ET UTILISATION DE LA VIS D'ENTRAÎNEMENT À ROULEMENT

(30) Priorität: 20.10.2009 DE 102009045857
(43) Veröffentlichungstag der Anmeldung: 29.08.2012
(73) Patentinhaber: Robert Bosch GmbH, 70442 Stuttgart (DE)
(72) Erfinder: VERHAGEN, Armin, 71701 Schwieberdingen (DE); NAGEL, Willi, 71686 Remseck/Hochdorf (DE); GOETZELMANN, Bernd, 71277 Rutesheim (DE)
(86) Internationale Anmeldenummer: PCT/EP2010/063029
(87) Internationale Veröffentlichungsnummer: WO 2011/047921

(56) Entgegenhaltungen:
- JP-A- 5 057 380
- JP-A- 2002 257 485
- US-A- 2 490 513
- US-A- 2 743 759
- US-A- 2 766 806
- US-A- 3 168 604
- US-A- 3 669 586
- US-A- 4 364 252
- US-A- 5 435 962

## Beschreibung

Die Erfindung betrifft einen Wälzgewindetrieb mit einer Spindel mit den Merkmalen des Oberbegriffs des Anspruchs 1 und die Verwendung des Wälzgewindetriebs in ei-nem elektromechanischen Bremskraftverstärker und in einem Lenkgetriebe für eine elektromekanische Servolenkung mit den Merkmalen der Oberbegriffe der Ansprüche 8 und 11.

### Stand der Technik

Die Patentschrift US 2, 7473,759 offenbart ein Herstellungsfverfahren für einen flexiblen Schlauch durch Vorsehen von Korrugationen auf dem Schlauchäußeren, wobei der Schlauch von innen mit Druck beaufschlagt wird.

Spindeltriebe sind bekannt. Sie gehören zu den Schraubgetrieben und wandeln eine rotatorische Antriebsbewegung in eine translatorische Abtriebsbewegung, gelegentlich auch umgekehrt, wobei in letzterem Fall der Spindeltrieb nicht selbsthemmend ausgeführt sein muss. Es kann eine Spindelmutter rotierend angetrieben und eine Spindel axial verschoben werden oder umgekehrt. Dabei ist die Spindelmutter anhand ihrer Funktion, zusammen mit der Spindel eine rotierende Bewegung in eine translatorische Bewegung oder umgekehrt zu wandeln, festzulegen, ihr Aussehen muss nicht unbedingt an eine Mutter erinnern. Man unterscheidet Gleitgewindetriebe von Wälzgewindetrieben, zu letzteren gehören u. a. Kugelgewindetriebe, vielfach mit einem Kugelumlauf, d. h. einer Kugelrückführung in der Spindelmutter. Die erfindungsgemäß hergestellte Spindel ist insbesondere für einen Wälzgewindetrieb vorgesehen.

Die Herstellung der Spindel erfolgt normalerweise spanend durch Drehen, Gewindewirbeln oder Schleifen oder umformend durch Rollen. Zur Erhöhung der Verschleißfestigkeit kann das Gewinde im Anschluss gehärtet und/oder zur Erhöhung der Genauigkeit geschliffen werden.

### Offenbarung der Erfindung

Der erfindungsgemäße Wälzgewindetrieb mit den Merkmalen des Anspruchs 1 enthält eine Spindel aus einem Rohr und einer oder mehreren Wendeln vor. Die Wendel bildet später einen Gewindegang der Spindel und hat dessen Querschnitt. Die Wendel wird auf das Rohr aufgebracht bzw. das Rohr wird in die Wendel eingebracht und das Rohr kann von innen druckbeaufschlagt werden, so dass es sich plastisch verformt und im Fußbereich an die Wendel anlegt bzw. anformt. Die Druckbeaufschlagung kann insbesondere hydraulisch erfolgen, das Verfahren kann als Innenhochdruckumformen (Englisch: hydroforming) bezeichnet werden. Im Fußbereich der Wendel, also am Übergang von der Wendel zum Rohr, kann sich das Rohr auf beiden Seiten von Windungen der Wendel etwas nach aussen an die Windungen anformen bzw. die Wendel kann sich etwas in das Rohr einformen, so dass ein Formschluss zwischen der Wendel und dem Rohr entsteht, der die Wendel in axialer Richtung auf dem Rohr hält. Die Wendel ist durch Form- und/oder Kraftschluss auf dem Rohr gehalten. Es kann auch zu einem Stoffschluss durch Kaltverschweißen kommen.

Der erfindungsgemäße Wälzgewindetrieb enthält eine dünnwandige und leichte Hohlspindel mit geringem Materialeinsatz. Ein weiterer Vorteil der Erfindung ist eine orthogonale Belastung der den Gewindegang der Spindel bildenden Wendel in einem Spindeltrieb, wenn die Wendel einen Rechteckquerschnitt aufweist. Außer einer konstanten Steigung ermöglicht die Erfindung auch eine sich über die Länge der Spindel ändernde Steigung.

Die abhängigen Ansprüche haben vorteilhafte Ausgestaltungen und Weiterbildungen der im Anspruch 1 angegebenen Erfindung zum Gegenstand.

Beispielsweise kann das Rohr und die Wendel in ein Werkzeug eingebracht und das Werkzeug geschlossen werden, bevor das Rohr von innen druckbeaufschlagt und dadurch plastisch von innen an den Fußbereich der Wendel angeformt wird. Ohne Bedeutung ist die Reihenfolge, in der das Rohr in die Wendel, die Wendel in das Werkzeug und das Rohr in das Werkzeug gelangen. Wesentlich ist, dass sich das Rohr mit der es wie ein Gewindegang umschliessenden Wendel im Werkzeug befindet. Das Werkzeug erinnert an ein Spritzgieß- oder ein Druckgusswerkzeug. Eine Kavität des Werkzeugs hat die Negativform der herzustellenden Spindel, das Werkzeug positioniert die Wendel auf dem Rohr bzw. hält die Wendel auf dem Rohr positioniert und stützt die Wendel und/oder das Rohr von aussen gegen die Druckbeaufschlagung des Rohrs von innen ab. Nach dem Schließen des Werkzeugs wird das Rohr von innen druckbeaufschlagt, so dass es sich plastisch verformt und im Fußbereich an die Wendel anlegt bzw. anformt. Im Fußbereich der Wendel, also am Übergang von der Wendel zum Rohr, kann die Kavität eine Fase oder Abrundung aufweisen, in die das Rohr hinein verformt wird, so dass wendelförmig umlaufende Wülste am Rohr im Fußbereich der Wendel ausgebildet werden, die die Wendel in axialer Richtung auf dem Rohr halten. Die Wendel ist durch Form- und/oder Kraftschluss auf dem Rohr gehalten. Es kann auch zu einem Stoffschluss durch Kaltverschweißen kommen.

Beispielsweise können mehrere Wendeln auf dem Rohr angeordnet werden. wodurch die Herstellung mehrerer Spindeln ermöglicht wird, indem das Rohr mit den aufgebrachten Wendeln nach der Entnahme aus dem Werkzeug in mehrere Spindeln getrennt wird. Durch mehrere axial ineinandergreifend auf das Rohr aufgebrachte Wendeln ist die Herstellung einer Spindel mit mehrgängigem Gewinde möglich.

Zur Erhöhung der Verschleißfestigkeit kann eine Wendel aus gehärtetem Stahl verwendet werden. Zur Erhöhung der Formgenauigkeit kann die Wendel nach der Herstellung der Spindel geschliffen werden, wobei das Schleifen der Wendelfläche/n genügt, die eine/die Gewindeflanke/n bildet/en.

Ebenso ist die Herstellung einer Spindel mit einem Innengewinde möglich. Dazu wird die Wendel auf einem Kern angeordnet, der sie bei der Hochdruckumformung von innen abstützt, und es wird das Rohr aussen auf der Wendel angeordnet, wobei die Reihenfolge auch umgekehrt sein kann. Danach wird das Rohr von aussen druckbeaufschlagt und formt sich wie an sich beschrieben von aussen an die Wendel an, so dass die Wendel dreh- und axialfest im Rohr gehalten ist.

Der Wälzgewindetrieb weist eine Antriebsrolle auf, die auf der Wendel wälzt. Weist die Wendel einen Rechteckquerschnitt und die Spindel infolgedessen einen rechteckigen Gewindequerschnitt auf, ist die Antriebsrolle insbesondere zylindrisch und weist eine Achse radial zur Spindel auf. Bei einem trapezförmigen Wendelquerschnitt und infolgedessen einem trapezförmigen Gewindegang kann die Antriebsrolle als Kegelrolle und/oder ihre Achse in einem Winkel zur Radialen zur Spindel angeordnet sein. Die Antriebsrolle, die auf der Wendel wälzt, die den Gewindegang der Spindel bildet, bildet sozusagen eine Spindelmutter oder ist Teil einer Spindelmutter. Eine Drehung der Spindel bewirkt eine Verschiebung der Antriebsrolle in achsparalleler Richtung zur Spindel. Vorzugsweise sind zwei, drei oder mehr Antriebsrollen um die Spindel herum verteilt angeordnet, wobei die Antriebsrollen entsprechend der Steigung der Wendel, die zugleich die Steigung des Gewindes der Spindel ist, zueinander versetzt angeordnet sind oder die Spindel ist mehrgängig. Die Antriebsrollen können in einem Ring oder einer Hülse drehbar gelagert sein, die die Spindel umschließt. Zwei oder mehr Antriebsrollen erhöhen die Tragfähigkeit, zwei einander gegenüber angeordnete Antriebsrollen oder mehr als zwei Antriebsrollen vermeiden ein Kippmoment, drei Antriebsrollen ermöglichen eine statisch bestimmte Abstützung. Die Antriebsrollen können gleich- oder ungleichmäßig über den Umfang verteilt angeordnet sein.

Eine bevorzugte Ausführungsform der Erfindung sieht zusätzlich zu der genannten Antriebsrolle, die dem translatorischen Antrieb dient, mindestens drei Zentrierrollen vor, die gleich- oder ungleichmäßig über den Umfang verteilt angeordnet sind und auf einem Außenumfang des Rohrs oder der Wendel wälzen. Die Zentrierrollen führen eine Spindelmutter koaxial auf der Spindel bzw. die Spindel koaxial in der Spindelmutter. Eine Ausgestaltung der Erfindung sieht einen Metallfaltenbalg vor, der als Axialfeder und als Drehsicherung des Wälzgewindetriebs dient. Aufgrund seiner Elastizität in axialer Richtung eignet sich ein Metallfaltenbalg als Axialfeder, und zwar als Zug- und/oder Druckfeder. Außerdem ist ein Metallfaltenbalg ausreichend torsionssteif, um als Drehsicherung zu dienen. Es ist ein Ende des Metallfaltenbalgs orts- und drehfest gehalten und das andere Ende des Metallfaltenbalgs axial- und drehfest an dem sich verschiebenden Teil des Spindeltriebs angebracht, also entweder an der Spindel oder an der Spindelmutter.

Gegenstand des Anspruchs 8 ist ein elektromechanischer Bremskraftverstärker mit einem Wälzgewindetrieb der vorstehend erläuterten Art, Gegenstand des Anspruchs 11 ist ein Lenkgetriebe für eine elektromechanische Servolenkung mit einem Spindeltrieb der vorstehend erläuterten Art. Da bei einem Lenkgetriebe eine Drehsicherung über beispielsweise ein Zahnstangengetriebe gegeben ist und eine Axialfederung nicht notwendig, wenn nicht sogar störend ist, ist für diese Verwendung der Erfindung kein Metallfaltenbalg vorgesehen, wenn auch nicht grundsätzlich ausgeschlossen. Ein elektromechanischer Bremskraftverstärker weist einen Elektromotor zum Antrieb des Wälzgewindetriebs auf. Hier ist eine Drehsicherung erforderlich, der Metallfaltenbalg als Axialfeder und als Drehsicherung also vorteilhaft. Der Metallfaltenbalg kann zusätzlich als Energiespeicher fungieren, der bei einem Lösen einer Fahrzeugbremsanlage Energie aufnimmt (der Metallfaltenbalg wird gespannt), die er bei einer Bremsbetätigung abgibt.

### Kurze Beschreibung der Zeichnung

Die Erfindung wird nachfolgend anhand in der Zeichnung dargestellter Ausführungsbeispiele näher erläutert. Es zeigen:
- Figur 1: ein Halbzeug einer erfindungsgemäß hergestellten Spindel in einem Achsschnitt;
- Figur 2A: eine Hälfte eines zweiteiligen Werkzeugs zur erfindungsgemäßen Herstellung der Spindel;
- Figur 2B: eine Hälfte eines gegenüber Fig. 2A abgewandelten zweiteiligen Werkzeugs zur erfindungsgemäßen Herstellung der Spindel;
- Figur 3: die erfindungsgemäß hergestellte Spindel;
- Figur 4: die Verwendung der Spindel aus Figur 3 in einem Getriebe eines elektromechanischen Bremskraftverstärkers gemäß der Erfindung; und
- Figur 5: die Verwendung der Spindel aus Figur 3 in einem Lenkgetriebe einer elektromechanischen Servolenkung gemäß der Erfindung.

### Ausführungsformen der Erfindung

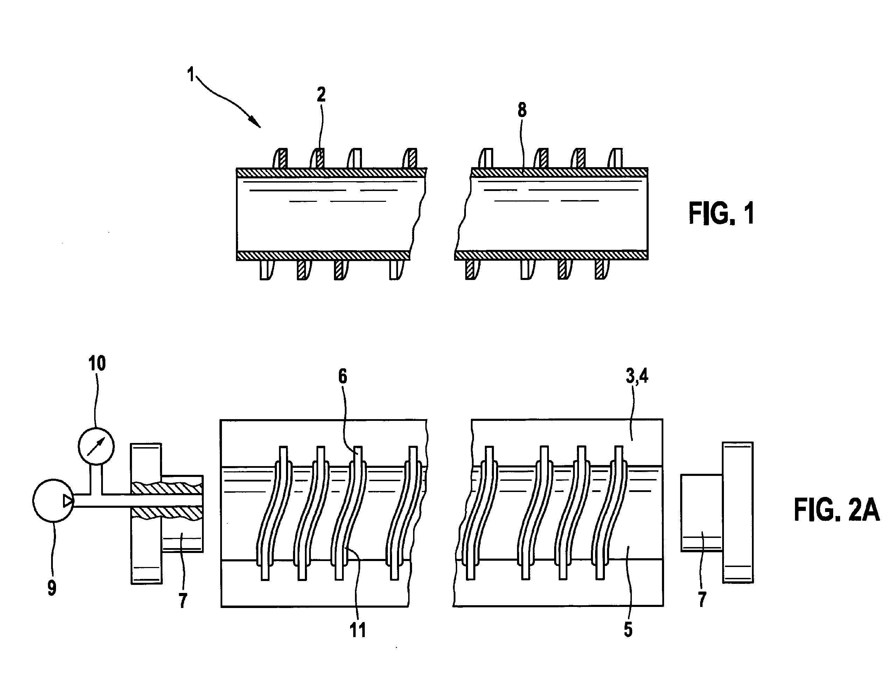

Zur Herstellung einer Spindel 1 kann ein Federdraht mit rundem Drahtquerschnitt zu einem Flachdraht mit rechteckigem Drahtquerschnitt gewalzt und zu einer Wendel 2 gebogen werden, so dass lange Seiten des Drahtquerschnitts radial verlaufen. Der Federdraht ist durch das Walzen verfestigt und er kann gehärtet sein. Eine Anzahl solcher Wendeln wird gleichachsig hintereinander in eine Hälfte 3 eines Werkzeugs 4 eingelegt, wie es in Fig. 2A dargestellt ist. Das Werkzeug 4 erinnert an ein Spritzgieß- oder ein Druckgusswerkzeug. Das Werkzeug 4 weist eine zylindrische Kavität 5 mit wendelförmigen Nuten 6 zur Aufnahme der Wendeln 2 auf. Ein Durchmesser des zylindrischen Teils der Kavität 5 entspricht einem Innendurchmesser der Wendeln 2. Das Werkzeug 4 ist in einer Axialebene geteilt. Das Werkzeug 4 kann wie dargestellt zweiteilig oder mehrteilig (als zweiteilig) sein. Die Kavität 5 ist an beiden Enden offen.

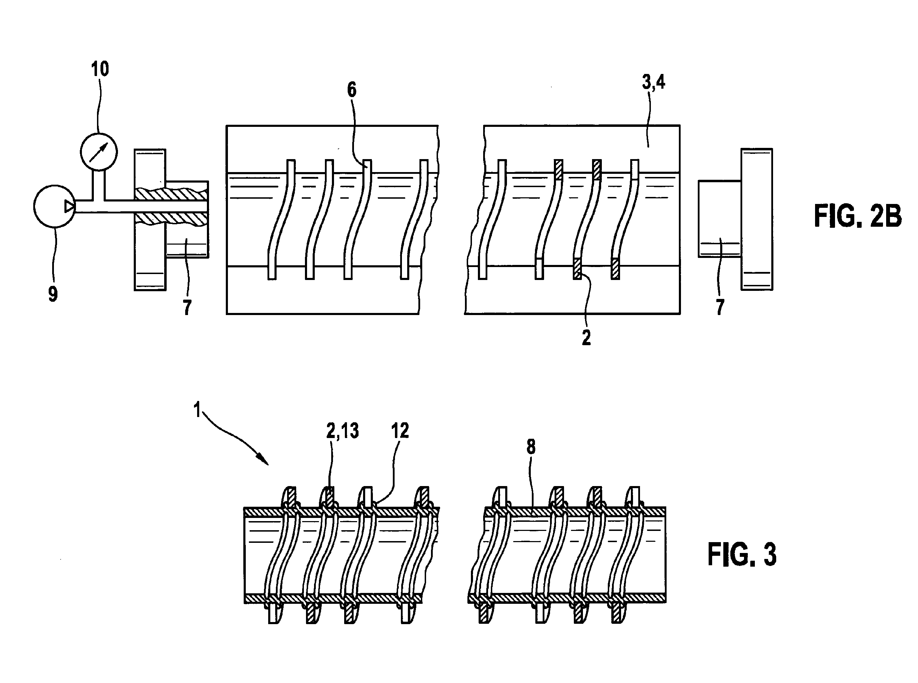

Ein Rohr 8, dessen Außendurchmesser dem Innendurchmesser der Wendeln 2 und damit dem Durchmesser des zylindrischen Teils der Kavität 5 entspricht, wird axial in die Kavität 5 und in die Wendeln 2 geschoben, die in das Werkzeug 4 eingelegt sind. Das Werkzeug 4 wird mit einer nicht dargestellten zweiten Werkzeughälfte geschlossen, die die Nuten 6 der dargestellten Hälfte 3 des Werkzeugs 4 fortsetzt. Das Rohr 8, das nicht aus dem Werkzeug 4 vorsteht, wird an beiden Enden mit Verschlussstücken 7 druckfest und dicht verschlossen und von innen mit Drucköl beaufschlagt. Die Druckbeaufschlagung ist symbolisch durch eine Hydropumpe 9 und ein Manometer 10 dargestellt. Es muss das Rohr 8 druckdicht verschlossen werden, so dass es von innen druckbeaufschlagbar ist. Es darf kein Druck im Werkzeug 4 aufgebaut werden, der das Rohr 8 von aussen beaufschlagt und die Umformung des Rohrs 8 ver- oder zumindest behindert. Durch die Druckbeaufschlagung von innen wird das Rohr 8 plastisch umgeformt, es legt sich von innen an die Wendeln 2 an, die von außen vom Werkzeug 4 abgestützt sind. An Kehlen am Übergang von den Nuten 6 in den zylindrischen Teil der Kavität 5 weist das Werkzeug 4 Rinnen 11 mit gerundetem Querschnitt auf, die sowohl zu den Nuten 6 als auch zum zylindrischen Teil der Kavität 5 hin offen sind. Das Rohr 8 wird durch die Druckbeaufschlagung von innen in die Rinnen 11 des Werkzeugs 4 hinein verformt, es bilden sich Wülste 12 beiderseits der Wendeln 2 in deren Fußbereich aus, also am Übergang von den Wendeln 2 zum Rohr 8, wie in Figur 3 dargestellt. Die Wendeln 2 sind auf dem Rohr 8 fixiert, zusätzlich zum Formschluss durch die Wülste 12 in axialer Richtung und einem Reibschluss können die Wendeln 2 mit dem Rohr 8 durch die Druckbeaufschlagung kaltverschweißt sein. Das Rohr 8 mit den Wendeln 2 bildet die Spindel 1, deren Gewindegänge 13 die Wendeln 2 bilden. Das Umformen des Rohrs 8 und Anformen von innen an die Wendeln 2 kann auch als Innenhochdruckumformen oder Hydroforming bezeichnet werden. Die Höhe des Drucks ist abhängig u. a. vom Material und der Wandstärke des Rohrs 8 und vom Umformgrad. Das Rohr 8 wird zwischen den Wendeln 2 getrennt, so dass eine Anzahl Spindeln 1 entsteht. Das Rohr 8 ist dünnwandig und ebenso die (Hohl-)Spindel 1.

Fig. 2B zeigt ein abgewandeltes Werkzeug 4. Es hat keine Rinnen 11 am Übergang von den Nuten 6 zum zylindrischen Teil der Kavität 5, sondern die Nuten 6 sind niedriger als ein Windungsquerschnitt der Wendel 2 in radialer Richtung breit ist. D. h. die Windungen der in die Nuten 6 des Werkzeugs 4 eingelegten Wendeln 2 stehen nach innen in den zylindrischen Teil der Kavität 5 über. Zur Veranschaulichung des Überstands der Windungen der Wendeln 2 nach innen in den zylindrischen Teil der Kavität 5 ist in Fig. 2B rechts eine Wendel 2 in eine Nut 6 des Werkzeugs 4 eingelegt dargestellt. Die Wendel 2 ist axial geschnitten gezeichnet, so dass die nach innen überstehenden Windungsquerschnitte der Wendel 2 als schraffierte Schnittfläche zu sehen sind. Der Überstand der Windungen der Wendeln 2 im Werkzeug 4 nach innen bewirkt bei der Umformung des Rohrs 8 durch Druckbeaufschlagung von innen, dass sich das Rohr 8 nicht nur von innen an die Wendeln 2 anformt, sondern die Wendeln 2 seitlich etwas umgreift. Dadurch wird ein Formschluss der Wendeln 2 auf dem Rohr 8 in axialer Richtung wie mit dem Werkzeug 8 aus Fig. 2A erreicht.

Zur Erhöhung der Genauigkeit und/oder Oberflächengüte können Flachseiten der Wendel 2, die den Gewindegang 13 bildet, beispielsweise durch Schleifen bearbeitet sein. Wird nur eine Flachseite des Gewindegangs 13 beaufschlagt, genügt es, nur diese eine Flachseite zu bearbeiten.

Abweichend von der dargestellten Ausführungsform können die Wendeln 2 eine sich über ihre Länge ändernde Steigung aufweisen, wodurch eine Spindel 1 mit sich ändernder Gewindesteigung herstellbar ist. Zur Herstellung einer zweigängigen Gewindespindel werden jeweils zwei Wendeln 2 axial vorzugsweise um eine halbe Steigung versetzt zueinander angeordnet. Entsprechend lässt sich auch eine Spindel 1 mit mehr als zwei Gewindegängen herstellen. Auch ist es möglich, die Wendel 2 mit einer Mulde, also einer Wellung auszubilden, um eine stabile Stellung einer noch zu erläuternden Spindelmutter zu bewirken.

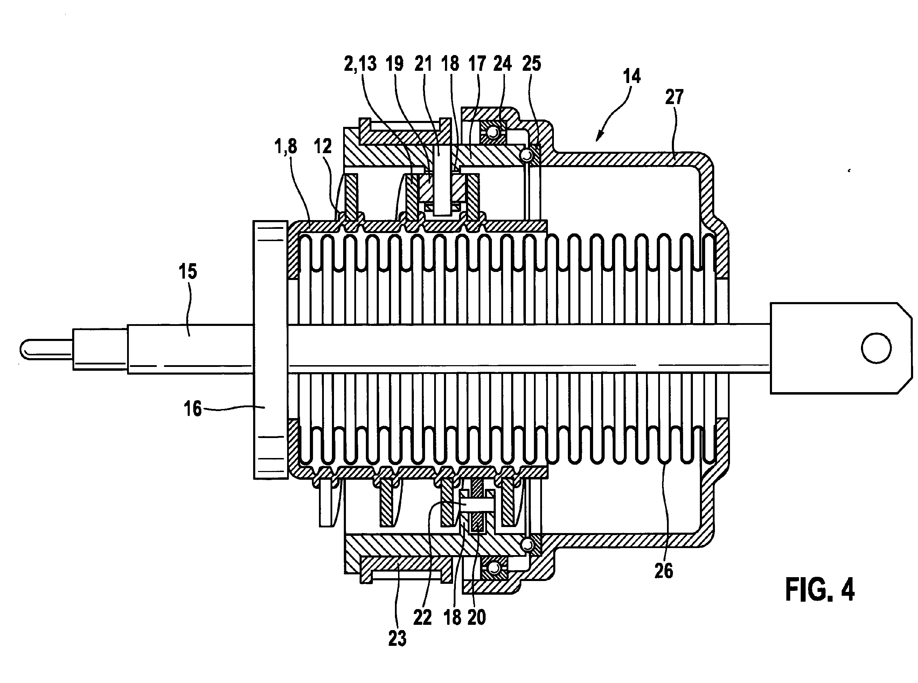

Figur 4 zeigt die Verwendung einer nach dem vorstehend anhand Figuren 1 bis 3 erläuterten Verfahren hergestellten Spindel 1 in einem Wälzgewindetrieb 14 eines im Übrigen nicht dargestellten elektromechanischen Bremskraftverstärkers. Das Rohr 8 der abgelängten Spindel 1 ist an einem Ende radial nach innen stehend umgeformt, wobei ein Mittelloch für den Durchtritt einer Pedalstange 15 verbleibt. Das nach innen umgeformte Ende des Rohrs 8 liegt an einer zylindrischen Druckscheibe 16 der Pedalstange 15 an. Die Pedalstange 15 verbindet ein nicht dargestelltes Fußbremspedal gelenkig mit einem ebenfalls nicht dargestellten Druckstangenkolben eines Hauptbremszylinders einer hydraulischen Fahrzeugbremsanlage. Eine Spindelmutter 17 umgreift die Spindel 1 koaxial. Die Spindelmutter 17 ist zylinderrohrförmig und kürzer als die Spindel 1. Sie weist einen nach innen stehenden, wendelförmig umlaufenden Steg 18 auf, der dieselbe Steigung wie die Wendel 2 aufweist, die den Gewindegang 13 der Spindel 1 bildet. Der Steg 18 erstreckt sich ungefähr über 360° und greift zwischen Windungen des Gewindegangs 13.

Der Steg 18 weist Aussparungen für Antriebsrollen 19 und Zentrierrollen 20 auf, die auf Zylinderstiften drehbar gelagert sind, welche Achsen 21, 22 der Antriebsrollen 19 und der Zentrierrollen 20 bilden. Es sind drei Antriebsrollen 19 äquidistant über den Umfang verteilt angeordnet, die radiale Achsen 21 aufweisen und die auf einer Flachseite der den Gewindegang 13 bildenden Wendeln 2 wälzen. Durch drei über den Umfang verteilt angeordnete Antriebsrollen 19 wird eine statisch bestimmte Abstützung der Spindelmutter 17 auf der Spindel 1 und umgekehrt der Spindel 1 in der Spindelmutter 17 erreicht.

Weitere drei Zentrierrollen 20 sind zwischen den zuvor genannten Antriebsrollen 19 angeordnet und weisen zur Wendel 2 orthogonale Achsen 22 auf. Die Zentrierrollen 20 wälzen im Zwischenraum zwischen dem Gewindegang 13 auf dem Rohr 8 der Spindel 1. Diese drei Zentrierrollen 20 zentrieren die Spindelmutter 17 auf der Spindel 1 und umgekehrt die Spindel 1 in der Spindelmutter 17.

Zum Drehantrieb ist eine Zahnriemenscheibe 23 auf die Spindelmutter 17 aufgepresst. Die Spindelmutter 17 ist mit einem Radiallager 24 und mit einem Axiallager 25 drehbar gelagert. Beide Lager 24, 25 sind im Ausführungsbeispiel Kugellager. Das Axiallager 25 stützt die Spindelmutter 17 in axialer Richtung ab. Bei einem Drehantrieb der Spindelmutter 17 mit einem nicht dargestellten Zahnriemen an der Zahnriemenscheibe 23 wälzen die Antriebsrollen 19 auf der Wendel 2, die den Gewindegang 13 der Spindel 1 bildet. Die Spindel 1 wird axial verschoben und übt eine Axialkraft über die Druckscheibe 16 auf die Pedalstange 15 aus. Auf diese Weise lässt sich eine mit dem nicht dargestellten Fußbremspedal auf die Pedalstange 15 ausgeübte Muskelkraft zur Betätigung des nicht dargestellten Hauptbremszylinders verstärken.

Koaxial im Rohr 8 der Spindel 1 ist ein Metallfaltenbalg 26 angeordnet, der die Pedalstange 15 umschließt. Der Metallfaltenbalg 26 stützt sich mit einem Ende dreh- und axialfest in einem Gehäuse 27 ab, sein anderes Ende ist dreh- und axialfest mit dem nach innen umgeformten Ende des Rohrs 8 verbunden. Der Metallfaltenbalg 26 bildet eine Drehsicherung, er hält die Spindel 1 drehfest. Außerdem bildet der Metallfaltenbalg 26 eine Axialfeder, die beim Verschieben der Spindel 8 gespannt wird und Energie einspeichert oder entspannt wird und Energie abgibt. Der Metallfaltenbalg 26 kann beim Lösen des nicht dargestellten Hauptbremszylinders durch Drehantrieb der Spindelmutter 17, die vom Wälzgewindetrieb 14 in eine Verschiebung der Spindel 1 gewandelt wird, gespannt werden und gibt die dabei gespeicherte Energie bei einer Bremsbetätigung wieder ab. In diesem Fall ist eine axiale Abstützung der Spindelmutter 17 in beiden Axialrichtungen notwendig. Ein maximales Drehmoment und eine maximale Leistung eines nicht dargestellten Elektromotors des elektromechanischen Bremskraftverstärkers verringern sich dadurch.

Das Gehäuse 27 ist beispielsweise durch Tiefziehen aus Blech hergestellt, es ist zylinderrohrförmig mit Durchmesserstufungen. Die Lager 24, 25 der Spindelmutter 17 sind an Durchmesserstufen des Gehäuses 27 aufgenommen.

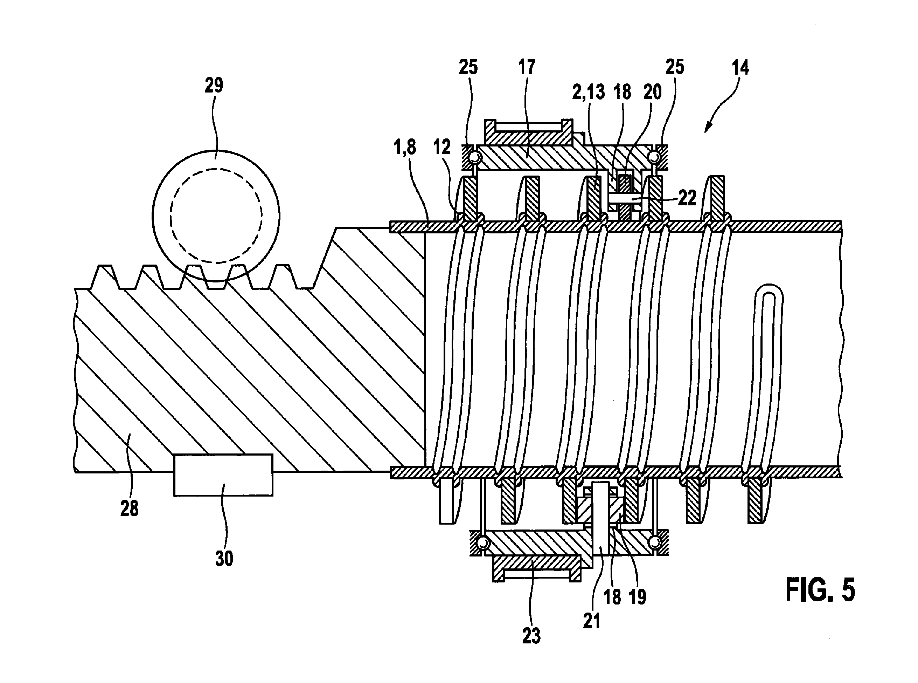

Figur 5 zeigt die Verwendung des bereits anhand Figur 4 beschriebenen erfindungsgemäßen Wälzgewindetriebs 14 in einem Lenkgetriebe einer elektromechanischen Servolenkung. Der Wälzgewindetrieb 14 in Figur 5 ist im Wesentlichen gleich aufgebaut wie der Wälzgewindetrieb 14 in Figur 4, seine Spindel 1 ist wie zu Figuren 1 bis 3 erläutert hergestellt, die entsprechenden vorstehenden Ausführungen werden in Bezug genommen. In ein Ende des Rohrs 8 der Spindel 1 ist eine Zahnstange 28 eingefügt und eingeschweisst, mit der ein Zahnrad 29 kämmt, das mit einem nicht dargestellten Lenkrad drehend antreibbar ist. Gegenüber dem Zahnrad 29 ist ein Druckstück 30 angeordnet, das die Zahnstange 28 abstützt und in Eingriff mit dem Zahnrad 29 hält. Die Zahnstange 28 ist in ihrer Längsrichtung in dem hohlrunden Druckstück verschiebbar geführt, der Eingriff des Zahnrads 29 in der Zahnstange 28 hält die Zahnstange 28 drehfest. Da die Zahnstange 28 durch das Einpressen in das Rohr 8 der Spindel 1 starr mit der Spindel 1 verbunden ist, benötigt die Spindel 1 keine eigene Drehsicherung, in Figur 5 entfällt deswegen der Metallfaltenbalg. An einem der Spindel 1 abgewandten Ende der Zahnstange 28 ist ein Kugelgelenk und an einem der Zahnstange 28 fernen Ende des Rohrs 8 der Spindel 1 ebenfalls ein Kugelgelenk angebracht, die die Zahnstange 28 und die Spindel 1 mit Spurstangen einer Lenkung verbinden (nicht dargestellt). Die Spindelmutter 17, die in Figur 5 gleich wie in Figur 4 ausgebildet ist und in gleicher Weise funktioniert, ist mit zwei Axiallagern 25 drehbar gelagert und in beiden axialen Richtungen abgestützt; sie kann dadurch Kräfte in beiden Richtungen übertragen. Die Antriebsrollen 19 mit den radialen Achsen 21 wälzen abhängig von der Drehrichtung der Spindelmutter 17 und der Verschieberichtung der Spindel 1 auf beiden Flachseiten der Wendel 2, die den Gewindegang 13 der Spindel 1 bilden. Es ist ein allenfalls sehr geringes Spiel zwischen den Windungen der Wendel 2 und den Antriebsrollen 19 und damit ein allenfalls sehr geringes Axialspiel der Spindel 1 in Bezug auf die Spindelmutter 17 vorhanden. Der Wälzgewindetrieb 14 verstärkt eine Lenkkraft, die vom Zahnrad 29 auf die Zahnstange 28 ausgeübt wird.

## Patentansprüche

1. Wälzgewindetrieb (14) mit einer Spindel (1), **dadurch gekennzeichnet, dass** die Spindel (1) wenigstens eine Wendel (2) und ein Rohr (8) aufweist, das durch Innenhochdruckumformung von innen an einen Fußbereich der wenigstens einen Wendel (2) angeformt ist, und dass der Wälzgewindetrieb (14) mindestens eine Antriebsrolle (19) aufweist, die auf der Wendel (2) wälzt, wobei die Wendel (2) in axialer Richtung durch einen Formschluss zwischen Wendel (2) und Rohr (8) gehalten wird.

2. Wälzgewindetrieb nach Anspruch 1, **dadurch gekennzeichnet, dass** die Wendel (2) den Gewindegang (13) der Spindel (1) bildet.

3. Wälzgewindetrieb nach Anspruch 1, **dadurch gekennzeichnet, dass** die Wendel (2) eine sich über ihre Länge verändernde Steigung aufweist.

4. Wälzgewindetrieb nach Anspruch 1, **dadurch gekennzeichnet, dass** die mindestens eine Antriebsrolle (19) in einem Ring (17) drehbar gelagert ist, der die Spindel (1) koaxial umschließt, und dass der Ring (17) mindestens drei Zentrierrollen (20) aufweist, die über seinen Umfang verteilt angeordnet sind und auf einem Umfang der Spindel (1) wälzen.

5. Wälzgewindetrieb nach Anspruch 4, **dadurch gekennzeichnet, dass** der Wälzgewindetrieb (14) drei Antriebsrollen (19) aufweist, die äquidistant über den Umfang der Spindel (1) verteilt sind und radiale Achsen (21) aufweisen.

6. Wälzgewindetrieb nach Ansprüchen 2 und 4, **dadurch gekennzeichnet, dass** die Zentrierrollen (20) auf dem Rohr (8) der Spindel (1) im Zwischenraum zwischen dem Gewindegang (13) wälzen.

7. Wälzgewindetrieb nach Anspruch 6, **dadurch gekennzeichnet, dass** die Zentrierrollen (22) zwischen den Antriebsrollen (19) angeordnet sind und zur Wendel (2) orthogonale Achsen aufweisen.

8. Elektromechanischer Bremskraftverstärker mit einem Elektromotor und mit einem mit dem Elektromotor antreibbaren, Wälzgewindetrieb (14) nach wenigstens einem der vorhergehenden Ansprüche.

9. Elektromechanischer Bremskraftverstärker nach Anspruch 8, **dadurch gekennzeichnet, dass** das Rohr (8) der Spindel (1) eine Pedaistange (15) des Bremskraftverstärkers (14) umfasst.

10. Elektromechanischer Bremskraftverstärker nach Anspruch 8, dadurch gekenzzeichnet, dass zur Drehsicherung der Spindel (1) koaxial im Rohr (8) der Spindel (1) ein Metallfaltenbalg(26) angeordnet ist.

11. Lenkgetriebe für eine elektromechanische Servolenkung, die einen Elektromotor zum Antrieb des Lenkgetriebes aufweist, wobei das Lenkgetriebe einen mit dem Elektromotor antreibbaren, eine Spindel (1) aufweisenden Wälzgewindetrieb (14) nach einem der Ansprüche 1 - 6 aufweist.

## Claims

1. Roller screw drive (14) comprising a spindle (1), **characterized in that** the spindle (1) has at least one coil (2) and a tube (8) which is integrally formed on a root region of the at least one coil (2) by hydroforming from the inside, and **in that** the roller screw drive (14) has at least one drive roller (19) which rolls on the coil (2), wherein the coil (2) is held in the axial direction by a positive lock between the coil (2) and the tube (8).

2. Roller screw drive according to Claim 1, **characterized in that** the coil (2) forms the thread (13) of the spindle (1).

3. Roller screw drive according to Claim 1, **characterized in that** the coil (2) has a pitch which varies over its length.

4. Roller screw drive according to Claim 1, **characterized in that** the at least one drive roller (19) is rotatably mounted in a ring (17) which coaxially surrounds the spindle (1), and **in that** the ring (17) has at least three centring rollers (20), which are arranged distributed over the circumference thereof and roll on a circumference of the spindle (1).

5. Roller screw drive according to Claim 4, **characterized in that** the roller screw drive (14) has three drive rollers (19), which are distributed equidistantly over the circumference of the spindle (1) and have radial axles (21).

6. Roller screw drive according to Claims 2 and 4, **characterized in that** the centring rollers (20) roll on the tube (8) of the spindle (1) in the intermediate space between the thread (13).

7. Roller screw drive according to Claim 6, **characterized in that** the centring rollers (22) are arranged between the drive rollers (19) and have axles orthogonal to the coil (2).

8. Electromechanical brake booster comprising an electric motor and comprising a roller screw drive (14), which can be driven with the electric motor, according to at least one of the preceding claims.

9. Electromechanical brake booster according to Claim 8, **characterized in that** the tube (8) of the spindle (1) comprises a pedal rod (15) of the brake booster (14).

10. Electromechanical brake booster according to Claim 8, **characterized in that** a metal bellows (26) is arranged coaxially in the tube (8) of the spindle (1) for securing the spindle (1) against rotation.

11. Steering gear for an electromechanical power steering system, which has an electric motor for driving the steering gear, wherein the steering gear has a roller screw drive (14), which can be driven with the electric motor and has a spindle (1), according to one of Claims 1-6.

## Revendications

1. Vis d'entraînement à roulement (14) munie d'une broche (1), **caractérisée en ce que** la broche (1) présente au moins une hélice (2) et un tube (8) qui est formé par formage interne sous haute pression depuis l'intérieur au niveau d'une région de base de l'au moins une hélice (2), et **en ce que** la vis d'entraînement à roulement (14) présente au moins un rouleau d'entraînement (19) qui roule sur l'hélice (2), l'hélice (2) étant retenue dans la direction axiale par un engagement positif entre l'hélice (2) et le tube (8).

2. Vis d'entraînement à roulement selon la revendication 1, **caractérisée en ce que** l'hélice (2) forme le pas de filetage (13) de la broche (1).

3. Vis d'entraînement à roulement selon la revendication 1, **caractérisée en ce que** l'hélice (2) présente une pente variant sur sa longueur.

4. Vis d'entraînement à roulement selon la revendication 1, **caractérisée en ce que** l'au moins un rouleau d'entraînement (19) est monté à rotation dans une bague (17) qui entoure coaxialement la broche (1), et **en ce que** la bague (17) présente au moins trois rouleaux de centrage (20) qui sont disposés de manière répartie sur sa périphérie et qui roulent sur une périphérie de la broche (1).

5. Vis d'entraînement à roulement selon la revendication 4, **caractérisée en ce que** la vis d'entraînement à roulement (14) présente trois rouleaux d'entraînement (19) qui sont répartis de manière équidistante sur la périphérie de la broche (1) et qui présentent des axes radiaux (21).

6. Vis d'entraînement à roulement selon les revendications 2 et 4, **caractérisée en ce que** les rouleaux de centrage (20) roulent sur le tube (8) de la broche (1) dans l'espace intermédiaire entre les filets (13).

7. Vis d'entraînement à roulement selon la revendication 6, **caractérisée en ce que** les rouleaux de centrage (22) sont disposés entre les rouleaux d'entraînement (19) et présentent des axes perpendiculaires à l'hélice (2).

8. Servofrein électromécanique comprenant un moteur électrique et une vis d'entraînement à roulement (14) pouvant être entraînée par le moteur électrique, selon au moins l'une quelconque des revendications précédentes.

9. Servofrein électromécanique selon la revendication 8, **caractérisé en ce que** le tube (8) de la broche (1) comprend une tige de pédale (15) du servofrein (14).

10. Servofrein électromécanique selon la revendication 8, **caractérisé en ce qu'**un soufflet pliant en métal (26) est disposé coaxialement dans le tube (8) de la broche (1) pour assurer la fixation en rotation de la broche (1).

11. Mécanisme de direction pour une direction assistée électromécanique, qui présente un moteur électrique pour l'entraînement du mécanisme de direction, le mécanisme de direction présentant une vis d'entraînement à roulement (14) selon l'une quelconque des revendications 1 à 6, pouvant être entraînée par le moteur électrique et présentant une broche (1).
